# EUROPÄISCHE PATENTSCHRIFT

(11) **EP 1 179 362 B1**
(45) Veröffentlichungstag und Bekanntmachung des Hinweises auf die Patenterteilung: **14.04.2004**
(21) Anmeldenummer: 01116918.2
(22) Anmeldetag: 11.07.2001
(51) Int. Cl.: B01J 12/00, B01J 15/00, B01J 19/24, C01B 3/32, C01B 3/38, B01J 35/00, H01M 8/06

(54) **Katalystorelement für einen Stapelreaktor und Verfahren zur Herstellung des Katalysatorelements**
Catalyst element for stack plate reactor and process for preparing it
Elément catalyseur pour un réacteur par empilement de plaques et procédé pour sa préparation

(30) Priorität: 08.08.2000 DE 10038525
(43) Veröffentlichungstag der Anmeldung: 13.02.2002
(73) Patentinhaber: Ballard Power Systems AG, 73230 Kirchheim/Teck-Nabern (DE)
(72) Erfinder: Ebert, Andreas, 73230 Kirchheim (DE); Lamla, Oskar, 73230 Kirchheim-Nabern (DE); Stefanovski, Tomas, 71034 Böblingen (DE)
(74) Vertreter: Beyer, Andreas, Dr.

(56) Entgegenhaltungen:
- EP-A- 0 974 392
- WO-A-00/31816
- US-A- 3 499 265

## Beschreibung

Die Erfindung betrifft ein Katalysatorelement für einen Stapelreaktor zur Wasserstofferzeugung aus Kohlenwasserstoffen mit einer Katalysatorscheibe aus porösem Material. Dieses Katalysatorelement eignet sich für den Anschluß eines Stapelreaktors an die Umgebung. Die Erfindung betrifft außerdem ein Verfahren zur Herstellung des Katalysatorelements, einen Stapelreaktor, der aus einer Mehrzahl aufeinandergestapelter Katalysatorscheiben aufgebaut ist sowie ein Verfahren zur Herstellung eines Stapelreaktors.

Aus der deutschen Offenlegungsschrift mit dem Aktenzeichen 197 43 673 A1 der gleichen Anmelderin ist eine Vorrichtung zur Wasserstofferzeugung bekannt, die mindestens eine durch Verpressen von Katalysatormaterial gebildete dünne großflächige Schicht (Katalysatorscheibe) aufweist, durch die ein Reaktionsgemisch unter Druckabfall hindurchpreßbar ist. Die Katalysatorscheibe weist eine netzartige Trägerstruktur auf, die vorzugsweise aus dendritischem Kupfer besteht. Diese netzartige Trägerstruktur wird dadurch geschaffen, daß einem Katalysatorpulver ein Metallpulver aus dendritischem Kupfer beigemischt und diese Mischung zu einem Formkörper, der Katalysatorscheibe im Grünlingszustand, verpreßt wird. Danach wird der Formkörper gesintert und so die Katalysatorscheibe fertiggestellt. Mehrere aufeinandergestapelte und zusammengefügte Katalysatorscheiben bilden einen Stapelreaktor.

Aus der deutschen Patentanmeldung mit dem Aktenzeichen 198 47 987.5 der gleichen Anmelderin ist eine weitere Vorrichtung zur Wasserstofferzeugung bekannt, die mindestens eine dünne großflächige Katalysatorschicht (Katalysatorscheibe) umfaßt. Das Ausgangsmaterial zur Herstellung der Katalysatorscheibe ist ausschließlich Kupferpulver, d.h. dem Kupferpulver wird kein zusätzlicher Anteil aus einem katalytisch aktivem Material zugemischt. Zur Herstellung wird das Kupferpulver, vorzugsweise dendritisches Kupfer, zu einem Formkörper in Form einer dünnen und stark komprimierten Schicht verpreßt, die die Katalysatorscheibe bilden wird. Der Formkörper wird anschließend in reduzierender Atmosphäre gesintert und stellt eine "Katalysatorscheibe" ohne Katalysatorschicht dar. Zum Ausbilden einer dünnen großflächigen Katalysatorschicht wird durch mehrmaliges Oxidieren und Reduzieren der Oberfläche des Formkörpers eine Oberflächenschicht des Formkörpers als Katalysatorschicht aktiviert. Ein Stapelreaktor wird aus mehreren aufeinandergeschich-teten und zusammengefügten Katalysatorscheiben aufgebaut.

Aus der deutschen Patentanmeldung mit dem Aktenzeichen 198 32 625.4 derselben Anmelderin ist ein Stapelreaktor aus aufeinandergestapelten Katalysatorscheiben sowie ein Verfahren zur Herstellung eines solchen Stapelreaktors bekannt. Dabei werden Katalysatorscheiben im Grünlingszustand, d.h. die gepreßten Formkörper vor dem Sinterprozeß, zu einem Stapelreaktor aufeinander gestapelt und dann gemeinsam im gestapelten Zustand gesintert. Das Sintern kann unter einer vorbestimmten Druckbeaufschlagung erfolgen. Durch das gemeinsame Sintern wird eine dichte Verbindung der einzelnen Katalysatorscheiben erreicht.

Derartige Stapelreaktoren sind gewöhnlich in einem Gehäuse eingebaut und mit Anschlußleitungen, beispielsweise für Eduktund Produktstrom, verbunden. Dabei müssen die Stapelreaktoren bzw. die Anschlußverbindungen nach außen hin sicher abgedichtet sein. Die notwendigen Dichtungskräfte werden im Stand der Technik als Druckkräfte über den gesamten Stapelreaktor aufgebracht. Dazu ist es notwendig, den gesamten Stapelreaktor über aufwendige Spannvorrichtungen einzuspannen. Abstands- bzw. Ausdehnungsänderungen beim Betrieb müssen über Federn oder ähnliche Ausgleichselemente abgefangen werden. Die Spannvorrichtung muß deshalb möglichst genau an die Abmessungen des Stapelreaktors angepaßt sein und ein Einbau unterschiedlich dimensionierter Stapelreaktoren ist schwierig.

Ausgehend hiervon liegt der Erfindung die Aufgabe zugrunde, ein Katalysatorelement, insbesondere zur Herstellung eines Stapelreaktors der eingangs genannten Art, zu schaffen, das eine einfache und kostengünstige Verbindung bzw. Anschluß an die Umgebung ermöglicht, ohne daß dabei auftretende Verbindungskräfte an das Katalysatorelement bzw. an einen solchen Stapelreaktor angreifen.

Diese Aufgabe wird gelöst durch ein Katalysatorelement mit den Merkmalen des Anspruchs 1 oder 3. Zur Lösung der Erfindung zugrundeliegenden Aufgabe wird weiterhin gemäß Anspruch 8 ein Stapelreaktor zur Wasserstofferzeugung aus Kohlenwasserstoffen vorgeschlagen, wobei der Stapelreaktor mindestens ein erfindungsgemäßes Katalysatorelement als Katalysatoranschlußscheibe umfaßt, ferner ein Verfahren zur Herstellung eines Katalysator-elements mit den Merkmalen des Anspruchs 9 sowie ein Verfahren zur Herstellung eines Stapelreaktors mit den Merkmalen des Anspruchs 14.

Das erfindungsgemäße Katalysatorelement für einen Stapelreaktor zur Wasserstofferzeugung aus Kohlenwasserstoffen mit einer Katalysatorscheibe aus porösem Material gemäß Anspruch 1 enthält ein massives Anschlußelement, dessen katalysatorseitiges Ende von der Katalysatorscheibe mindestens teilweise umschlossen und mit dieser verbunden ist, wobei am katalysatorabgewandten, freiliegenden Ende des Anschlußelementes Befestigungsmittel vorgesehen sind. Hierbei kann das massive Anschlußelement mit dem porösen Material der Katalysatorscheibe durch Ansintern, Löten, Schweißen, Kleben, Schrauben und/oder Klemmen verbunden werden, wobei das Ansintern unter Druckbeaufschlagung erfolgt. In einer Ausführung kann auch zwischen dem katalysatorseitigen Ende des Anschlußelements und der Oberfläche der Katalysatorscheibe eine Vermittlerschicht vorgesehen sein.

Das Katalysatorelement für einen Stapelreaktor zur Wasserstoff-erzeugung aus Kohlenwasserstoffen mit einem Katalysatorelement aus porösem Material nach Anspruch 3 enthält ebenfalls ein massives Anschlußelement, dessen katalysatorseitiges Ende jedoch eine Vermittlerschicht aufweist, wobei die Vermittlerschicht ganzflächig durch Sintern, Löten oder Kleben mit dem Anschluß-element verbunden ist, wobei die Vermittlerschicht ganzflächig durch Sintern mit der Katalysatorscheibe verbunden ist und wobei am katalysatorabgewandten, freiliegenden Ende des Anschlußelementes Befestigungsmittel vorgesehen sind. Sofern das verwendete Anschlußelement aus einem anderen Werkstoff gefertigt ist wie die nachfolgende Vermittlerschicht, kann zur Verbesserung der Haftung zwischen Anschlußelement und Vermittlerschicht eine galvanisch erzeugte Metallschicht vorgesehen sein, wobei die Schichtdicke dieser Metallschicht üblicherweise etwa 50 µm bis einige 100 µm betragen kann. Die Vermittlerschicht selbst, die ein Metall oder eine Metallegierung enthält oder daraus besteht, weist eine Schichtdicke von etwa 0,5 bis 3 mm, bevorzugt von etwa 1 bis 2 mm auf. Beispielsweise wird bei der Verwendung eines Anschlußelements aus Edelstahl und einer Vermittlerschicht - vorzugsweise aus dendritischem Kupfer - die galvanisch erzeugte Metallschicht ebenfalls aus Kupfer sein.

Eine Verbindung der Katalysatorscheibe bzw. eines daraus aufgebauten Stapelreaktors mit der Umgebung erfolgt über das Anschlußelement und das dort vorgesehene Befestigungsmittel. Verbindungskräfte werden so in vorteilhafter Art und Weise von dem massiven Anschlußelement aufgenommen und nicht auf die Katalysatorscheibe bzw. den Stapelreaktor übertragen. Ein Verspannen des gesamten Stapelreaktors ist nicht notwendig, so daß auf eine aufwendige Spannvorrichtung verzichtet werden kann.

Zwischen Anschlußelement und Katalysatorscheibe wirken im wesentlichen nur die Gewichtskräfte der Katalysatorscheibe / des Stapelreaktors bzw. gegebenenfalls Beschleunigungskräfte in Abhängigkeit von der gewählten Lagerung/Befestigung. Durch das zumindest teilweise Einbetten des massiven Anschlußelementes in die poröse Katalysatorscheibe bzw. durch das Verbinden von Anschlußelement und Katalysatorscheibe durch eine Vermittlerschicht werden die Verbindungen einerseits von Katalysatorscheibe und Anschlußelement sowie andererseits von Anschlußelement und Umgebunganschluß bzw. die wirkenden Verbindungskräfte voneinander separiert.

Bei der Verbindung von Anschlußelement und Katalysatorscheibe muß jedoch folgender Sachverhalt berücksichtigt werden: Die Katalysatorscheibe, vorzugsweise aus Kupfer, enthaltend Katalysatormaterial oder eine Katalysatorschicht auf der Oberfläche, ist hitzeempfindlich. Eine Verbindung mit dem Anschlußelement, vorzugsweise aus Edelstahl, ist jedoch nur bei hohen Temperaturen möglich. Um nun eine Verbindung zwischen Katalysatorscheibe und Anschlußelement zu erhalten, kann dies durch einen Klemmechanismus oder über eine zwischen Katalysatorscheibe und Anschlußelement befindliche Vermittlerschicht realisiert werden, wobei der unterschiedlichen Temperaturverträglichkeit der Bauteile bzw. Materialien durch 2 Verfahrensschritte Rechnung getragen werden muß: in einem ersten Schritt wird bei hohen Temperaturen das Anschlußelement mit der Vermittlerschicht durch Löten bei etwa 800°C bis 1000°C, durch Sintern bei etwa 600°C bis 1000°C unter Druck oder durch Kleben mit einem für die verwendeten Werkstoffe bzw. Materialien geeigneten Kleber zusammengeführt. In einem darauffolgenden zweiten Schritt erfolgt die Anbindung der Katalysatorscheibe an die Vermittlerschicht vorteilhafterweise bei einer niedrigeren Temperatur durch Ansintern unter Druck bei Temperaturen von etwa 400°C bis 600°C. Die Katalysatorscheibe kann auch aus anderen Metallen oder Metallegierungen aufgebaut sein.

Zum Verbinden von Anschlußelement und Katalysatorscheibe bzw. Anschlußelement und Vermittlerschicht durch einen Lötvorgang kann beispielsweise Silberlot oder silberlothaltiges Material verwendet werden.

In einer Ausgestaltung der Erfindung ist am katalysatorseitigen Ende des Anschlußelementes ein Vorsprung vorgesehen, der sich im wesentlichen senkrecht zur erwarteten Hauptbelastungsrichtung der Verbindung von Katalysatorscheibe und Anschlußelement erstreckt. Durch eine solche Gestaltung des katalysatorseitigen Endes wird die Verbindung von Katalysatorscheibe und Anschluß-element zusätzlich zu den je nach Art des gewählten Fügeverfahrens vorliegenden Verbindungskräften durch Formschluß unterstützt.

In einer bevorzugten Ausführungsform der Erfindung schließt ein Oberflächenbereich des katalysatorseitigen Endes des Anschlußelementes im wesentlichen bündig mit der äußeren Oberfläche der Katalysatorscheibe ab und ein Abschnitt des katalysatorseitigen Endes erstreckt sich zumindest teilweise parallel zur der äußeren Oberfläche der Katalysatorscheibe. Eine solche Gestaltung des katalysatorseitigen Endes kann beispielsweise durch eine treppenartige Struktur erreicht werden. Beim Anschließen/Ver- binden der Katalysatorscheibe kann über eine entsprechende Gegenfläche, die im wesentlichen plan auf der Katalysatoroberseite und dem Oberflächenbereich aufliegt, erreicht werden, daß die Verbindung von Katalysatorscheibe und Anschlußelement zusätzlich verspannt und damit verstärkt wird. Die Gegenfläche kann z.B. durch eine Platte oder einen entsprechend gestalteten Umgebungsanschluß realisiert sein.

In einer bevorzugten Ausgestaltung der Erfindung weist das Anschlußelement mindestens eine Durchführung auf, über die Reaktionsedukte und/oder -produkte des Katalysators bzw. Stapelreaktors zu- und/oder abgeführt werden. Über die Durchführung im Anschlußelement kann z.B. ein Katalysator oder ein Stapelreaktor über das Anschlußelement mit entsprechenden Versorgungsanschlüssen der Umgebung verbunden sein. Die für ein sicheres Abdichten des Anschlusses notwendigen Dichtungskräfte werden dabei von dem Anschlußelement aufgenommen und wirken nicht auf den Katalysator bzw. Stapelreaktor.

Weitere Vorteile und Ausgestaltungen der Erfindung ergeben sich aus der Beschreibung und der beiliegenden Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in den Zeichnungen schematisch dargestellt und wird im folgenden unter Bezugnahme auf die Zeichnungen näher erläutert.
- Fig. 1: zeigt in seitlicher Darstellung einen Schnitt durch eine erste Ausführungsform eines erfindungsgemäßen Katalysatorelements.
- Fig. 2: zeigt in seitlicher Darstellung einen Ausschnitt durch eine weitere Ausführungsform eines erfindungsgemäßen Katalysatorelements.
- Fig. 3: zeigt in seitlicher Darstellung einen Ausschnitt durch eine dritte Ausführungsform eines erfindungsgemäßen Katalysatorelements.
- Fig. 4: zeigt in seitlicher Darstellung einen Schnitt durch eine vierte Ausführungsform eines erfindungsgemäßen Katalysatorelements.
- Fig. 5: zeigt in seitlicher Darstellung einen Ausschnitt durch die vierte Ausführungsform des erfindungsgemäßen Katalysatorelements im angeschlossenen Zustand.

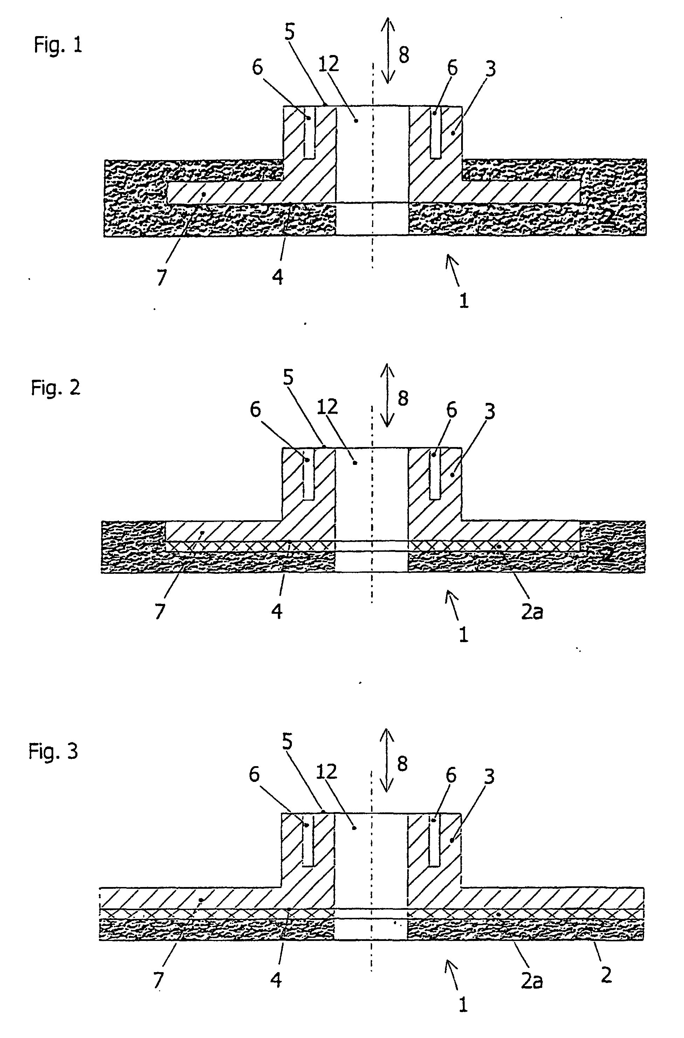

Fig. 1 zeigt in seitlicher Darstellung einen Schnitt durch eine erste Ausführungsform eines erfindungsgemäßen Katalysatorelements 1. Die Katalysatorscheibe 2 besteht aus porösem Material und weist vorzugsweise eine (nicht dargestellte) netzartige Trägerstruktur auf. Aus Gründen der Übersichtlichkeit sind Details der Katalysatorscheibe 2 wie z.B. Kanäle für E-dukt-/Produktstoffe nicht dargestellt.

Die Trägerstruktur kann z.B. dadurch erzeugt werden, daß bei der Herstellung der Katalysatorscheibe 2 einem Katalysatorpulver, d.h. Material mit katalytisch aktiven Substanzen, ein Metallpulver, vorzugsweise dendritisches Kupferpulver, beigemischt wird, das beim Verpressen zur Ausbildung einer netzartigen Trägerstruktur führt. Eine andere Möglichkeit besteht darin, für die Katalysatorscheibe 2 ausschließlich Kupferpulver zu verwenden, das zumindest teilweise aus dendritischem Kupfer besteht. Allgemein wird die Katalysatorscheibe 2 dadurch hergestellt, daß aus pulverförmigem Ausgangsmaterial ein Formkörper, ein sogenannter Grünling, gepreßt und der Grünling gesintert wird.

In die Katalysatorscheibe 2 ist ein massives Anschlußelement 3 integriert. Das Anschlußelement 3 besteht aus einem Metall wie z.B. Kupfer oder einer Metallegierung wie z.B. Stahl. Das massive Anschlußelement 3 hat ein katalysatorseitiges Ende 4 und ein katalysatorabgewandtes, freiliegendes Ende 5.

Das katalysatorseitige Ende 4 des Anschlußelementes 3 ist zumindest teilweise von dem porösen Material der Katalysatorscheibe 2 umschlossen und mit dieser verbunden. Diese Verbindung kann beispielsweise durch Ansintern, Löten bzw. Schweißen, Kleben und/oder Klemmen geschaffen werden. Am katalysatorseitigen Ende 4 des Anschlußelementes 3 ist ein Vorsprung 7 vorgesehen. Der Vorsprung erstreckt sich im wesentlichen senkrecht zu einer erwarteten Hauptbelastungsrichtung 8 der Verbindung von Katalysatorscheibe 2 und Anschlußelement 3. Diese sind somit auch formschlüssig miteinander verbunden.

Am katalysatorabgewandten, freiliegenden Ende 5 des Anschlußelementes 3 sind Befestigungsmittel 6 vorgesehen. Mit den Befestigungsmitteln 6 kann das Anschlußelement 3 bzw. die Katalysatorscheibe 2 oder ein daraus aufgebauter Stapelreaktor z.B. mit Halterungen, Anschlüssen oder Geräten der Umgebung verbunden werden. Die Verbindungskräfte dieser Verbindung wirken im wesentlichen auf das Anschlußelement 3 und werden nicht auf die Katalysatorscheibe 2 übertragen. In den Zeichnungen sind diese Befestigungsmittel 6 als Schraubverbindungen dargestellt. Es können aber auch andere geeignete, dem Fachmann bekannte Befestigungsmittel eingesetzt werden. Das Anschlußelement 3 kann für eine einfache Befestigung der Katalysatorscheibe 2 an Halterungen oder auch zum Verbinden mit oder Anschließen an Versorgungsleitungen bzw. -quellen verwendet werden. Für letzteres ist das massive Anschlußelement 3 mit mindestens einer Durchführung 12 ausgestattet. Über die Durchführung 12 werden beispielsweise (nicht dargestellte) Kanäle der Katalysatorscheibe 2 bzw. des Stapelreaktors für Produkt- bzw. Eduktströme an entsprechende Anschlüsse der Umgebung für Edukte/Produkte angeschlossen.

Fig. 2 zeigt in seitlicher Darstellung einen Ausschnitt durch eine weitere Ausführungsform eines erfindungsgemäßen Katalysatorelements. Das Katalysatorelement 1 enthält ein massives Anschlußelement 3, dessen katalysatorseitiges Ende 4 eine Vermittlerschicht (2a) aufweist. Die Vermittlerschicht 2a ist ganzflächig durch Sintern oder Löten mit dem Anschlußelement 3 verbunden. Das Löten oder Ansintern unter Druck erfolgt bei Temperaturen um etwa 1000°C. Die weitere Anbindung an die Katalysatorscheibe 2, die eine paßgerechte Aussparung mit seitlichem Rand aufweist, erfolgt ganzflächig durch Sintern unter Druckbeaufschlagung bei etwa 450°C über die Vermittlerschicht 2a. Am katalysatorabgewandten, freiliegenden Ende 5 des Anschlußelementes 3 sind Befestigungsmittel 6 vorgesehen.

Fig. 3 zeigt in seitlicher Darstellung einen Ausschnitt durch eine dritte Ausführungsform eines erfindungsgemäßen Katalysatorelements. Das Katalysatorelement 1 enthält ein massives Anschlußelement 3, dessen katalysatorseitiges Ende 4 ebenfalls eine Vermittlerschicht 2a aufweist, die ganzflächig durch Sintern oder Löten mit dem Anschlußelement 3 verbunden ist. Das Löten oder Ansintern unter Druck erfolgt bei Temperaturen um etwa 1000°C. Die weitere Anbindung an die Katalysatorscheibe 2 erfolgt über die Vermittlerschicht 2a ganzflächig durch Sintern unter Druckbeaufschlagung bei etwa 450°C, wobei das Anschluß-element korrespondierend zum Gesamtumfang der Katalysatorscheibe bündig abschließt. Am katalysatorabgewandten, freiliegenden Ende 5 des Anschlußelementes 3 sind Befestigungsmittel 6 vorgesehen.

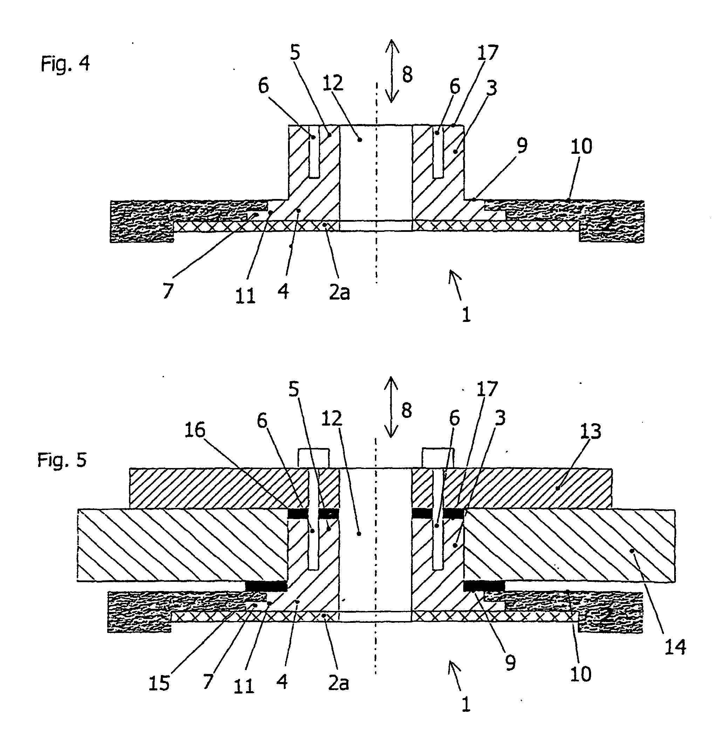

Fig. 4 zeigt in seitlicher Darstellung einen Schnitt durch eine vierte Ausführungsform des Katalysatorelements 1. Dabei ist das katalysatorseitige Ende 4 des Anschlußelementes 3 so gestaltet, daß ein Oberflächenbereich 9 im wesentlichen bündig mit der äußeren Oberfläche 10 der Katalysatorscheibe 2 abschließt. Außerdem erstreckt sich ein Abschnitt 11 des katalysatorseitigen Endes 4 zumindest teilweise parallel zur der äußeren Oberfläche 10 der Katalysatorscheibe 2.

Eine solche Gestaltung kann z.B. durch eine treppenartige Struktur der Außenseite des katalysatorseitigen Endes 4 realisiert sein. Über eine solche Struktur können im angeschlossenen Zustand, wie in Fig. 5 gezeigt ist, die Katalysatorscheibe 2 und das Anschlußelement 3 gegeneinander verspannt und dadurch die Verbindungsfestigkeit der Verbindung von Katalysatorscheibe 2 und Anschlußelement 3 erhöht werden. Wie in Fig.4 dargestellt, kann anstatt der Ausbildung des Oberflächenbereiches 9 auch vorgesehen sein, daß die Anschlußfläche 17 des umgebungsseitigen Endes 5 des Anschlußelementes 3 bündig mit der Oberfläche 10 der Katalysatorscheibe 2 abschließt. Eine solche Ge-staltung wird vom verfügbaren und notwendigen Raum für das Befestigungsmittel 6, d.h. von der Stärke der Katalysatorscheibe 2 und der Art des Befestigungsmittels 6 bestimmt.

Fig. 5 zeigt in seitlicher Darstellung einen Ausschnitt durch die vierte Ausführungsform des erfindungsgemäßen Katalysatorelements im verbundenen bzw. angeschlossenen Zustand. Das massive Anschlußelement 3 bzw. die Katalysatorscheibe 2 ist über eine Schraubverbindung 6 mit einem Befestigungsabschnitt 13 eines Versorgungsanschlußes verbunden. Zwischen Befestigungsabschnitt 13 und Anschlußelement 3 ist eine Dichtung 16 zum Abdichten angeordnet. Die Verbindungskräfte des Befestigungsmittels 6 werden vom Anschlußelement 3 und Befestigungsabschnitt 13 aufgenommen und nicht auf die Katalysatorscheibe 2 übertragen.

Zwischen Befestigungsabschnitt 13 und Katalysatorscheibe 2 ist eine Platte 14 vorgesehen, die im wesentlichen plan zwischen dem Befestigungsabschnitt 13 und der Oberseite 10 der Katalysatorscheibe 2 paßt. Mit Hilfe der Platte 14 kann ein Bereich der Katalysatorscheibe 2 zwischen dem Abschnitt 11 des Anschlußelementes 3 und der Platte 14 verspannt werden, um die Verbindung von Katalysatorscheibe 2 und Anschlußelement 3 zu verstärken. Dabei ist die Platte 14 so dimensioniert, daß die Befestigungskräfte im wesentlichen von dem Anschlußelement 3 aufgenommen werden und nur ein Teil der Befestigungskräfte zum Verspannen von Katalysatorscheibe 2 und Anschlußelement 3 beiträgt. Eine weitere Dichtung 15 im Bereich der Verbindung dient zur gleichmäßigen Verteilung bzw. Regulierung des Druckes zum Verspannen und zur zusätzlichen Dichtung des Anschlußelements zur Umgebung.

Zur Herstellung der Katalysatorscheibe 2 wird, wie bereits in der Beschreibung zu Fig. 1 erwähnt, ein pulverförmiges Ausgangsmaterial zu einem Formkörper verpreßt und gesintert. Die Katalysatorscheibe 2 kann nach einem Verfahren erzeugt werden, wie es in der deutschen Offenlegungsschrift mit dem Aktenzeichen 197 43 673 A1 der gleichen Anmelderin beschrieben ist. Nach diesem Verfahren wird als pulverförmiges Ausgangsmaterial eine Mischung aus Katalysatormaterial und Metallpulver verwendet. Zur Herstellung der Katalysatorscheibe 2 kann aber auch das in der deutschen Patentanmeldung mit dem Aktenzeichen 198 47 987.5 der gleichen Anmelderin beschriebene Verfahren eingesetzt werden. Dabei wird vorzugsweise dendritisches Kupferpulver zu einem Formkörper verpreßt und in reduzierender Atmosphäre gesintert. Anschließend wird durch Oxidieren und Reduzieren der Oberfläche des Formkörpers eine dünne großflächige Katalysatorschicht aktiviert.

Um das Anschlußelement 3 in die Katalysatorscheibe 2 zu integrieren, kann dieses zusammen mit dem pulverförmigen Ausgangsmaterial zu dem Formkörper verpreßt werden. Die Verbindung von Anschlußelement 3 und Katalysatorscheibe 2 kann durch Ansintern oder Verkleben erfolgen. Beim Verkleben wird als Klebstoff vorzugsweise ein thermisch aktivierbarer Klebstoff verwendet. Das Ansintern erfolgt vorzugsweise nach einem Verfahren, wie es in der deutschen Patentanmeldung mit dem Aktenzeichen 198 32 625.4 derselben Anmelderin beschrieben ist. Demnach kann das Anschlußelement 3 an die Katalysatorscheibe 2 unter Druckbeaufschlagung angesintert werden. Hohlräume der Katalysatorscheibe können dabei durch Stützeinrichtungen abgestützt werden. Beim Aufbau eines Stapelreaktors aus Katalysatorscheiben, werden die Katalysatorscheiben vorzugsweise in aufeinandergestapeltem Zustand gemeinsam gesintert.

Zum Integrieren des Anschlußelementes 3 in die Katalysatorscheibe 2 ist es auch möglich, zuerst einen Formkörper mit entsprechenden Ausnehmungen für das Anschlußelement 3 zu pressen und gegebenenfalls zu sintern. Das Anschlußelement 3 wird in die Ausnehmungen des Formkörpers eingesetzt und durch Löten, Schweißen, Kleben, Klemmen und/oder Ansintern mit demselben verbunden. Auf das Anschlußelement 3 kann eine Vermittlerschicht 2a aufgebracht werden, welche den Verbund zwischen Anschlußelement 3 und Katalysatorscheibe 2 unterstützt.
Für eine bessere Haftung des Materials der Katalysatorscheibe an dem Anschlußelement 3, kann dieses vor dem Integrieren in den Formkörper bzw. die Katalysatorscheibe 1 durch Sandstrahlen, Ätzen und/oder Auftragen einer Vermittlerschicht (2a) einer Oberflächenbehandlung unterzogen werden.

## Patentansprüche

1. Katalysatorelement (1) für einen Stapelreaktor zur Wasserstofferzeugung aus Kohlenwasserstoffen mit einer Katalysatorscheibe aus porösem Material (2, 2a),
**dadurch gekennzeichnet,**
**daß** das Katalysatorelement (1) ein massives Anschlußelement (3) enthält, dessen katalysatorseitiges Ende von der Katalysatorscheibe mindestens teilweise umschlossen und mit dieser verbunden ist, wobei am katalysatorabgewandten, freiliegenden Ende (5) des Anschlußelementes (3) Befestigungsmittel (6) vorgesehen sind.

2. Katalysatorelement nach Anspruch 1,
**dadurch gekennzeichnet,**
**daß** zwischen dem katalysatorseitigen Ende (4) des Anschlußelements (3) und der Oberfläche der Katalysatorscheibe (2) eine Vermittlerschicht (2a) vorgesehen ist.

3. Katalysatorelement (1) für einen Stapelreaktor zur Wasserstofferzeugung aus Kohlenwasserstoffen mit einem Katalysatorelement aus porösem Material (2, 2a),
**dadurch gekennzeichnet,**
**daß** das Katalysatorelement (1) ein massives Anschlußelement (3) enthält, dessen katalysatorseitiges Ende eine Vermittlerschicht (2a) aufweist, wobei die Vermittlerschicht (2a) ganzflächig durch Sintern, Löten oder Kleben mit dem Anschlußelement (3) verbunden ist, wobei die Vermittlerschicht (2a) ganzflächig durch Sintern mit der Katalysatorscheibe (2) verbunden ist und wobei am katalysatorabgewandten, freiliegenden Ende (5) des Anschlußelementes (3) Befestigungsmittel (6) vorgesehen sind.

4. Katalysatorelement nach Anspruch 2 oder 3,
**dadurch gekennzeichnet,**
**daß** zwischen Anschlußelement(3) und Vermittlerschicht (2a) eine galvanisch erzeugte Metallschicht vorgesehen ist.

5. Katalysatorelement nach Anspruch 1 oder 3,
**dadurch gekennzeichnet,**
**daß** am katalysatorseitigem Ende (4) des Anschlußelementes (3) ein Vorsprung (7) vorgesehen ist, der sich im wesentlichen senkrecht zur erwarteten Hauptbelastungsrichtung (8) der Verbindung von Katalysatorscheibe (2) und Anschlußelement (3) erstreckt.

6. Katalysatorelement nach Anspruch 1 oder 5,
**dadurch gekennzeichnet,**
**daß** ein Oberflächenbereich (9) des katalysatorseitigen Endes (4) des Anschlußelementes (3) im wesentlichen bündig mit der äußeren Oberfläche (10) der Katalysatorscheibe abschließt und sich ein Abschnitt (11) des katalysatorseitigen Endes (4) zumindest teilweise parallel zur der äußeren Oberfläche (10) der Katalysatorscheibe (2) erstreckt.

7. Katalysatorelement nach einem der Ansprüche 1 bis 6,
**dadurch gekennzeichnet,**
**daß** das Anschlußelement mindestens eine Durchführung (12) aufweist, über die Reaktionsedukte und/oder -produkte des Katalysators bzw. Stapelreaktors zu- und/oder abgeführt werden.

8. Stapelreaktor zur Wasserstofferzeugung aus Kohlenwasserstoffen, wobei der Stapelreaktor aus einer Mehrzahl von Katalysatorscheiben aufgebaut ist,
**dadurch gekennzeichnet,**
**daß** der Stapelreaktor mindestens ein Katalysatorelement (1) nach einem der Ansprüche 1 bis 6 als Katalysatoranschlußscheibe umfaßt.

9. Verfahren zur Herstellung eines Katalysatorelements (1) nach Anspruch 2 oder 3,
**dadurch gekennzeichnet,**
**daß** zunächst die Oberfläche des Anschlußelements (3) durch Sintern, Löten oder Kleben mit der Vermittlerschicht (2a) verbunden wird und daß anschließend die freie Seite der Vermittlerschicht (2a) durch Sintern mit der Katalysatorscheibe (2) verbunden wird.

10. Verfahren nach Anspruch 9,
**dadurch gekennzeichnet,**
**daß** am katalysatorseitigen Ende (4) des Anschlußelementes (3) vor dem Aufbringen der Vermittlerschicht (2a) eine Metallschicht durch Galvanisierung aufgebracht wird.

11. Verfahren nach Anspruch 9,
**dadurch gekennzeichnet,**
**daß** die Vermittlerschicht (2a) mit der Oberfläche der Katalysatorscheibe (2) durch Sintern bei etwa 400°C bis 600°C unter Druck verbunden werden.

12. Verfahren nach Anspruch 9 oder 10,
**dadurch gekennzeichnet,**
**daß** die Vermittlerschicht (2a) mit dem Anschlußelement (3) durch Ansintern bei etwa 600°C bis 1000°C verbunden wird.

13. Verfahren nach Anspruch 9 oder 10,
**dadurch gekennzeichnet,**
**daß** die Vermittlerschicht (2a) mit dem Anschlußelement (3) durch einen Lötprozeß bei etwa 800°C bis 1000°C verbunden wird.

14. Verfahren zur Herstellung eines Stapelreaktors nach Anspruch 8, **dadurch gekennzeichnet, daß** zuerst ein Katalysatorelement (1) hergestellt und das Katalysatorelement (1) anschließend mit weiteren Katalysatorscheiben im gestapelten Zustand gesintert werden.

## Claims

1. Catalyst element (1) for a stacked reactor for generating hydrogen from hydrocarbons, having a catalyst disc of porous material (2, 2a), **characterized in that** the catalyst element (1) includes a solid connection element (3), the catalyst-side end of which is at least partially enclosed by the catalyst disc and is joined to this disc, attachment means (6) being provided at the exposed end (5), which is remote from the catalyst, of the connection element (3).

2. Catalyst element according to Claim 1, **characterized in that** a mediator layer (2a) is provided between the catalyst-side end (4) of the connection element (3) and the surface of the catalyst disc (2).

3. Catalyst element (1) for a stacked reactor for generating hydrogen from hydrocarbons, having a catalyst element of porous material (2, 2a), **characterized in that** the catalyst element (1) includes a solid connection element (3), the catalyst-side end of which has a mediator layer (2a), the mediator layer (2a) being joined to the connection element (3) over the entire area by sintering, soldering or adhesive bonding, the mediator layer (2a) being joined to the catalyst disc (2) over the entire area by sintering, and attachment means (6) being provided at the exposed end (5), which is remote from the catalyst, of the connection element (3).

4. Catalyst element according to Claim 2 or 3, **characterized in that** a metal layer which is produced by electrodeposition is provided between connection element (3) and mediator layer (2a).

5. Catalyst element according to Claim 1 or 3, **characterized in that** a projection (7), which extends substantially perpendicular to the expected principal direction of load (8) on the join between catalyst disc (2) and connection element (3), is provided on the catalyst-side end (4) of the connection element (3).

6. Catalyst element according to Claim 1 or 5, **characterized in that** a surface region (9) of the catalyst-side end (4) of the connection element (3) ends substantially flush with the outer surface (10) of the catalyst disc, and a section (11) of the catalyst-side end (4) extends at least partly parallel to the outer surface (10) of the catalyst disc (2).

7. Catalyst element according to one of Claims 1 to 6, **characterized in that** the connection element has at least one passage (12), via which reaction starting materials and/or reaction products of the catalytic converter or stacked reactor are supplied and/or discharged.

8. Stacked reactor for generating hydrogen from hydrocarbons, the stacked reactor being composed of a plurality of catalyst discs, **characterized in that** the stacked reactor comprises at least one catalyst element (1) according to one of Claims 1 to 6 as catalyst connection disc.

9. Process for producing a catalyst element (1) according to Claim 2 or 3, **characterized in that** first of all the surface of the connection element (3) is joined to the mediator layer (2a) by sintering, soldering or adhesive bonding, and **in that** then the free side of the mediator layer (2a) is joined to the catalyst disc (2) by sintering.

10. Process according to Claim 9, **characterized in that** a metal layer is applied by electrodeposition to the catalyst-side end (4) of the connection element (3) before the mediator layer (2a) is applied.

11. Process according to Claim 9, **characterized in that** the mediator layer (2a) is joined to the surface of the catalyst disc (2) by sintering at approximately 400°C to 600°C under pressure.

12. Process according to Claim 9 or 10, **characterized in that** the mediator layer (2a) is joined to the connection element (3) by sintering on at approximately 600°C to 1000°C.

13. Process according to Claim 9 or 10, **characterized in that** the mediator layer (2a) is joined to the connection element (3) by a soldering process at approximately 800°C to 1000°C.

14. Process for producing a stacked reactor according to Claim 8, **characterized in that** first of all a catalyst element (1) is produced, and then the catalyst element (1) is sintered together with further catalyst discs in the stacked state.

## Revendications

1. Elément catalyseur (1) pour un réacteur par empilement de plaques pour la production d'hydrogène à partir d'hydrocarbures, comportant une rondelle catalytique constituée d'un matériau poreux (2, 2a),
**caractérisé en ce que** l'élément catalyseur (1) contient un élément de raccordement (3) massif, dont la partie terminale située du côté du catalyseur est pour le moins partiellement entourée par la rondelle catalytique et est reliée à celle-ci, des moyens de fixation (6) étant prévus à la partie terminale (5) libre de l'élément de raccordement (3) située à l'opposé du catalyseur.

2. Elément catalyseur selon la revendication 1,
**caractérisé en ce qu'**une couche intermédiaire (2a) est prévue entre la partie terminale (4) de l'élément de raccordement (3) située du côté du catalyseur et la surface de la rondelle catalytique (2).

3. Elément catalyseur (1) pour un réacteur par empilement de plaques pour la production d'hydrogène à partir d'hydrocarbures, comportant une rondelle catalytique constituée d'un matériau poreux (2, 2a),
**caractérisé en ce que** l'élément catalyseur (1) contient un élément de raccordement (3) massif, dont la partie terminale située du côté du catalyseur présente une couche intermédiaire (2a), ladite couche intermédiaire (2a) étant reliée sur toute sa surface par frittage,
brasage ou collage à l'élément de raccordement (3) et étant reliée sur toute sa surface par frittage à la rondelle catalytique (2), et des moyens de fixation (6) étant prévus à la partie terminale (5) libre de l'élément de raccordement (3) située à l'opposé du catalyseur.

4. Elément catalyseur selon la revendication 2 ou 3,
**caractérisé en ce qu'**une couche métallique obtenue par galvanisation est prévue entre l'élément de raccordement (3) et la couche intermédiaire (2a).

5. Elément catalyseur selon la revendication 1 ou 3,
**caractérisé en ce qu'**une saillie (7) est prévue à la partie terminale (4) de l'élément de raccordement (3) située du côté du catalyseur, laquelle saillie s'étend pour l'essentiel perpendiculairement au sens (8) de la charge principale que la liaison entre la rondelle catalytique (2) et l'élément de raccordement (3) est appelée à supporter.

6. Elément catalyseur selon la revendication 1 ou 5,
**caractérisé en ce qu'**une zone (9) de la surface de la partie terminale (4) de l'élément de raccordement (3) située du côté du catalyseur est pour l'essentiel affleurant avec la surface (10) extérieure de la rondelle catalytique et qu'un tronçon (11) de la partie terminale (4) voisine du catalyseur s'étend pour le moins partiellement parallèlement à la surface (10) extérieure de la rondelle catalytique (2).

7. Elément catalyseur selon l'une des revendications 1 à 6,
**caractérisé en ce que** l'élément de raccordement présente au moins un passage (12) par lequel les éduits et/ou les produits de réaction du catalyseur et du réacteur par empilement de plaques sont amenés et/ou évacués.

8. Réacteur par empilement de plaques pour la production d'hydrogène à partir d'hydrocarbures, le réacteur par empilement de plaques étant réalisé à partir d'une pluralité de rondelles catalytiques,
**caractérisé en ce que** le réacteur par empilement de plaques comprend au moins un élément catalyseur (1) selon l'une des revendications 1 à 6 en tant que rondelle catalytique de raccordement.

9. Procédé pour la fabrication d'un élément catalyseur (1) selon la revendication 2 ou 3,
**caractérisé en ce que** la surface de l'élément de raccordement (3) est tout d'abord reliée par frittage, brasage ou collage à la couche intermédiaire (2a) et que le côté libre de la couche intermédiaire (2a) est ensuite relié par frittage à la rondelle catalytique (2).

10. Procédé selon la revendication 9,
**caractérisé en ce qu'**une couche métallique est appliquée par galvanisation sur la partie terminale (4) de l'élément de raccordement (3) située du côté du catalyseur avant la mise en place de la couche intermédiaire (2a).

11. Procédé selon la revendication 9,
**caractérisé en ce que** la couche intermédiaire (2a) est reliée à la surface de la rondelle catalytique (2) par frittage réalisé sous pression, à une température située entre environ 400°C et 600°C.

12. Procédé selon la revendication 9 ou 10,
**caractérisé en ce que** la couche intermédiaire (2a) est reliée à l'élément de raccordement (3) par frittage réalisé à une température située entre environ 600°C et 1000°C.

13. Procédé selon la revendication 9 ou 10,
**caractérisé en ce que** la couche intermédiaire (2a) est reliée à l'élément de raccordement (3) par brasage réalisé à une température située entre environ 800°C et 1000°C.

14. Procédé pour la fabrication d'un réacteur par empilement de plaques selon la revendication 8, **caractérisé en ce qu'**il est tout d'abord fabriqué un élément catalyseur (1) et que l'élément catalyseur (1) est ensuite fritté à l'état empilé à d'autres rondelles catalytiques.
